# EUROPEAN PATENT APPLICATION

(11) **EP 4 283 428 A1**
(43) Date of publication of application: **29.11.2023**
(21) Application number: 22175513.5
(22) Date of filing: 25.05.2022
(51) Int. Cl.: G05B 23/02, G05B 19/418, H04W 84/18

(54) **SYSTEM AND METHOD FOR MONITORING A PRODUCTION PROCESS**

(71) Applicant: ABB SCHWEIZ AG, 5400 Baden (CH)
(72) Inventor: AHREND, Ulf, 76185 Karlsruhe (DE); DECKER, Andreas, 49377 Vechta (DE); GEBHARDT, Joerg, 55130 Mainz (DE); SCHULZ, Dirk, 67149 Meckenheim (DE); BERNING, Matthias, 67549 Worms (DE)
(74) Representative: Maiwald GmbH

(57) **Abstract**

The invention relates to a system for monitoring a production process, comprising:
at least one always-on sensor (10), wherein the at least one always-on sensor (10) is configured to continuously provide continuous sensor data (Dc);
a plurality of sleeping sensors (20), wherein the plurality of sleeping sensor (20) is configured to be switchable between a sleeping state in which the plurality of sleeping sensors (20) is not active and an active state, in which the plurality of sleeping sensors (20) is configured to provide wake up sensor data (Dw);
a control device (30), being connected with the at least one always-on sensor (10) and the plurality of sleeping sensors (20), wherein the control device (30) is configured to:
receive the continuous sensor data (Dc) from the at least one always-on sensor (10);
detect an anomaly (A) in the production process and determine an anomaly location (80) of the anomaly (A) both based on the provided continuous sensor data (Dc); wherein the anomaly location (80) defines an area in which the anomaly (A) is located;
waking up at least one of the plurality of sleeping sensors (20) that are located within the anomaly location (80); and
receiving the wake up sensor data (Dw) from the at least one woken up sleeping sensors (21).

## Description

### Field of the invention

The present disclosure relates to a system and a method for monitoring a production process in particular in an industrial plant.

### Technical background

Industrial plants are sparsely instrumented. The number and location of sensors is primarily determined by the need to control the core production process. These sensors are typically integrated into some kind of distributed control system, DCS. Auxiliary equipment like e.g. rotating machinery, heat/cooling supply units are not or only very rarely monitored. One thus finds still a lot of manual interaction to keep a process running or detect and analyze abnormal operation.

Increasing the level of automation or even going towards autonomous plant operation is difficult to achieve with this sparse information. It is therefore necessary to find a way of adding information from a running process and various plant aspects in a cost-efficient and scalable way adding interpretation and cognition based on this new information to support autonomous functions and avoid manual tasks and analysis

A widespread deployment of many new sensors is not yet seen because there is no economically feasible and scalable solution. Particularly, plant-wide solutions do not exist. Economic viability requires finding a trade-off between cost efficiency and performance in a very constrained environment.

The introduction of new information sources tends to make the analysis more complex: data volume, preprocessing and analysis efforts rise. Pure data driven approaches are often lacking significance. The second problem to be solved is thus to control and limit the complexity, early decide on significant information and analyze the information in a way that is comparable to human cognitive and problem solving capabilities.

In other words, there is the need for an improved system and a method for monitoring a production process, in particular in view of efficiency.

### Summary

The present invention is defined by the subject-matter of the independent claims. Additional features of the invention are presented in the dependent claims.

According to an aspect of the present invention, a system for monitoring a production process comprises the following: A plurality of always-on sensors, wherein the plurality of always-on sensors is configured to continuously provide continuous sensor data. A plurality of sleeping sensors, wherein the plurality of sleeping sensor is configured to be switchable between a sleeping state in which the plurality of sleeping sensors is not active and an active state, in which the plurality of sleeping sensors is configured to provide wake up sensor data. A control device, being connected with the plurality of always-on sensors and the plurality of sleeping sensors, wherein the control device is configured to receive the continuous sensor data from the plurality of always-on sensors, detect an anomaly in the production process and determine an anomaly location of the anomaly based on the provided continuous sensor data; wherein the anomaly location defines an area in which the anomaly is located, waking up at least one of the plurality of sleeping sensors that are located within the anomaly location and receiving the wake up sensor data from the at least one woken up sleeping sensors.

In other words, the provided system combines multiple sensors and leverages continuous sensor data by combining the information with temporary sensor data, referred to as wake up sensor data.

The term "continuous sensor data", as used herein, relate to sensor data that is provided by sensors that are constantly active and continuously provide sensor data. That being said, the continuous sensor data is still provided at predetermined sampling rate. For example, the always-on sensors provide continuous sensor data in 1 second intervals.

The term "wake up sensor data", as used herein, relates to sensor data that is provided by sensors that are not active all the time. The so called sleeping sensors are configured to be externally activated and when activated provided the wake up sensor data.

The term "anomaly", as used herein, relates to a state change of the production process. The state change for example is indicated by a value of the continuous sensor data that exceeds a predetermined threshold. In another example, the anomaly can also comprise an external trigger from a user, like an operator who wants to trigger the sleeping sensors in a specific location.

The term "anomaly location", as used herein, refers to spatial locations, e.g. on a plant site, or to logical and functional locations, e.g. in any plan or outline of a plant or facility or component.

Preferably, the woken up sleeping sensors provide wake up sensor data with a higher sampling rate than the always-on sensors provide the continuous sensor data. For example, the sampling rate of the continuous sensor data is about 1 second, while the sampling rate of the wake up sensor data is smaller than 0,5 seconds.

The always-on sensors and the sleeping sensors are controlled by the control device, which is also referred to as central watchdog. The control device triggers, or in other words wakes up, at least one sleeping device based on events, in particular when an anomaly is detected. The anomaly is generally detected by the control device using the continuous sensor data. However, the always-on sensors or the whole upper layer may comprise its own evaluation unit, in particular using artificial intelligence, to detect the anomaly and provide information about the anomaly to the control device.

Preferably, waking up at least one of the plurality of sleeping sensors that are located within the anomaly location comprises parametrizing the at least one of the plurality of sleeping sensors.

The control device is furthermore configured to parametrize the sleeping sensors. Parametrizing, as used herein, comprises adjusting properties of the sleeping sensors. For example adjusting a measurement interval, or in other words a sampling rate, of woken up sleeping sensors. In another example, parametrizing comprises activating/deactivating sensor functions of the woken up sleeping sensors.

In other words, the control device is an intelligence, preferably implemented in software, that controls all sensors. It is able to activate and deactivate the sleeping sensors and parametrize the sleeping sensors. This means, it turns on needed sensor functions, of e.g. a multi-sensor, and sets the measurement performance, e.g. measurement update rate, sample frequency, number of samples. It also tracks and ensures the integrity of the sensing system by monitoring the status and mastering connectivity, power need, battery levels etc.

The control device uses a trigger that dynamically turns on the sleeping sensors. The trigger preferably comprise an external trigger or internal trigger. External triggers comprise radio frequency based wake-up telegrams issued by the control device. Other realizations of an external wake-up are possible: e.g. visible light, acoustic etc. Internal or implicit triggers are triggers that originate from the process or plant itself. They can be realized by e.g. sensors operating in interrupt mode that detect certain thresholds or gradients e.g. a sensing device is fully activated once a certain temperature limit is reached.

The control device is furthermore configured to monitor a sensing system status of the sleeping sensors, in particular a connectivity or a battery status.

In general, the hierarchical structure of the system, in particular in an upper layer and a lower layer, is based on the property of being always active like the always-on sensors or being switchable like the sleeping sensors.

Preferably, the sensor system is multi-modal. This means that a relevant range of physical quantities can be captured. The measured quantities may provide 1D information, 2D (imaging techniques) and 3D (e.g. Lidar) or hyperdimensional (e.g. 3D spatial information with spectral analysis). Measurements can cover different wavelength regimes (e.g. visual, IR, acoustic, Lidar, ...). The sensors are arranged in a network like topology, i.e. they are connected to the control device and/or are interconnected to communicate with each other (mesh).

Preferably, the system consists of two layers. In a first, upper layer, which is represented by the always-on sensors. They are used for detection of the anomaly and rough localization of the anomaly. The always-on sensors are always activated.

The upper layer, which is also referred to as supervision layer, of the system is always on and is intended to be used to detect the anomalies. This is done by comparison with the normal state and/or planned state of a plant. This can be, e.g., an acoustic fingerprint, optical image or thermographic image. The normal state has to be learned before or could be deduced from a process or plant model describing this norm state. Depending on the kind of production the sensing functions can be adapted. This supervision stage is designed in a way that it is sensitive to many effects that may indicate anomalies, thus it is also referred to as broad band detection system. This can be a combination of sensors that sense e.g, electromagnetic radiation within a large band of wavelengths (e.g. from microwave via THz, IR to the visual regime). In addition, the system may contain a range of sound detectors, again covering a broad spectrum from infrasound via acoustic sound to ultra sound. An additional feature of this supervision layer is, that it can provide an anomaly location, which basically is a spatial resolution of the anomaly or at least directional information of the anomaly compared to the always-on sensor that detected the anomaly. This is to get a rough localization of where the detected anomaly is originating from.

The second layer is a set of sleeping sensors, which are only activated once the upper supervision layer detects and localizes an anomaly.

The lower layer is a suite of distributed sensors that perform more specific measurements, e.g. condition monitoring sensor on a motor. They are used to trigger a deeper investigation of the type and potentially cause of the anomaly. These sensors are not always on but typically in sleep mode, thus they are referred to as sleeping sensors. They are only activated on demand. Their purpose is to increase the spatial resolution, help isolating a problem and possibly find the root cause of it. The activated sensor functions and performance parameters are determined by the control device.

Thus, the spatial as well as temporal resolution of measurements is increased by activating, or in other words waking up, sleeping sensors in the vicinity of an anomaly.

This saves power and thus increase lifetime of the sleeping sensors. Furthermore, this provides only information if/where/when something is to be detected.

Preferably, there are further layers beyond the lower layer, implementing a further "stepwise sensing". Stepwise sensor activation then has the ability to detect problem root causes with higher and higher accuracy. The sensor data coming from every step finally can converge to the root cause and ideally also in some action proposal.

The whole sensor system is thus a hierarchical and dynamic structure composed of sensing hardware and software controlling the hardware.

Preferably, the always-on sensors are wire sensors that are hardwired with the control device. Thus, the always-on sensors are not limited on battery life.

Preferably, the sleeping sensors are wireless sensors that are connected with the control device by wireless communication. Further preferably, the sleeping sensors are powered by an autonomous power supply, like a battery.

Thus, a smart, flexible, situation-aware, hierarchical, multi-modal and dynamic sensing system is provided.

Consequently, an improved system for monitoring a production process is provided.

In a preferred embodiment, the plurality of always-on sensors comprise broad band sensors.

Broad band sensor provide a cost-efficient detection of a state change, or in other words an anomaly, in the process. Furthermore, broad band sensors are able to cover a relatively large area and thus allow a rough localization of the anomaly.

In a preferred embodiment, the broad band sensors comprise an electromagnetic radiation sensor, an acoustic sensor, a vibration sensor and/or a visual sensor.

This can be a combination of sensors that sense e.g, electromagnetic radiation within a large band of wavelengths (e.g. from microwave via THz, IR to the visual regime). In addition, the system may contain a range of sound detectors, covering a broad spectrum from infrasound via acoustic sound to ultra sound.

In a preferred embodiment, the system comprises an analysis device, being connected with the control device, wherein the control device is configured to provide determine filtered sensor data from the received continuous sensor data and/or the wake up sensor data. The analysis device is configured to receive filtered sensor data from the control device and determine a root cause of the detected anomaly using a root cause analysis.

The control device preferably acts as a data filter because it ensures that only information which is deemed significant is forwarded to the analysis device. It thus reduces the effort and complexity of the analysis device because it avoids that analysis algorithms need to look at all signals at all times.

Thus, the control device implements a kind of natural data filter for the upper analysis layers: It transmits data only if an abnormal situation has been identified and only where and when it has been identified. This reduces the amount of data to be handled by the analysis system, increases the significance, and possibly speed of the analysis.

Preferably, the analysis device comprises an engineering or deployment function which determines the sensor location and function for a given plant. This could be based on existing P&I diagrams and process models.

In a preferred embodiment, the control device is configured to provide the filtered sensor data to the analysis device only when an anomaly is detected by the control device.

In a preferred embodiment, the filtered sensor data comprises wake up sensor data of the woken up sleeping sensors that are located within the anomaly location.

In a preferred embodiment, the analysis device comprises a root cause analysis unit that is configured to perform the root cause analysis, wherein the root cause analysis unit comprises a machine learning unit.

The fact that the sensing system relies on a dense observation of a process allows to fuse information from multiple sensors and apply machine learning techniques with a system of spatially distributed sensors.

In a preferred embodiment, the root cause analysis unit comprises a process model, wherein the process model is configured to simulate the production process, wherein the process model is used to perform the root cause analysis.

Traditionally, monitoring is done with dedicated sensors that are able to directly measure a certain fault (e.g. a water sensor that detects a leakage if the leak happens in the vicinity of the sensor). A smart combination of the information of multiple sensors, possibly combined with a process model, may reveal the same problem by a so-called indirect measurement.

Indirect measurement means that the sensing system learns a certain state of the system which is characterized by a multitude of sensor information (fingerprint). The effect to be measured is thus not directly measured but inferred from the state of the sensors in the vicinity of the problem.

For example, a closed or blocked valve could be identified by an abnormal reduction of flow rate in a certain pipe section or by a tank filling slower than expected. A direct measurement would require expensive flow meters. An indirect measurement could use the following approach: Assuming that fluid is hotter or colder than the environment, a simple temperature sensor along the pipe section and an ambient temperature sensor could be used to estimate the heat flux lost through the piping system at a given flow (heat flux) rate. The nominal heat flux rate could be predetermined by a process model calculating the ideal heat loss for a given flow rate. If the measured temperatures indicate a reduced heat flux this could be attributed to a reduced fluid flow (caused e.g. by a blockage of the pipe cross section). Alternatively, simple vibration sensors could measure vibration rms to indicate moving fluid in the pipe section. Vibration rms states along a pipe section could thus be related to a flow/process condition. The expensive flow measurement is thus reduced to a simple temperature and/or vibration measurement and - due to the denser observation - allows to better localize where the fault occurred. The root cause analysis will thus be a hierarchical logic: the analysis goes from coarse and simple measurements to more and more refined measurements and analysis unless a problem is clearly identified. The findings including the reasoning are provided to relevant stakeholders (e.g. operator) to support decision making.

The provided system is thus not replacing traditional instrumentation but extending it to enhance problem solving and decision making capabilities. It thus leads to more robust production, higher safety, more operational efficiency and better workforce usage and efficiency.

In a preferred embodiment, the analysis device comprises a monitoring unit, wherein the monitoring unit is configured to provide failure detection and interpretation using the filtered sensor data.

In a preferred embodiment, the control device is configured to verify the detected anomaly using the received wake up sensor data, if the anomaly is verified, providing the analysis unit with the filtered sensor data, if the anomaly is not verified, putting the woken up at least one of the plurality of sleeping sensors into the sleeping state.

The verification of the anomaly preferably comprises determining an improved anomaly location that relates to the location of the woken up sleeping sensor that provided the wake up sensor data that could verify the anomaly.

In a preferred embodiment, determining the root cause of the detected anomaly using a root cause analysis comprises the following. If the route cause analysis fails, determining a root cause fail signal and providing the root cause fail signal to the control device, wherein the control device is configured to refine the parametrization of the woke up sleeping sensors, when the root cause fail signal is received.

In a preferred embodiment, the analysis device is configured to determine suggested actions to resolve the root cause using the determined root cause.

In a preferred embodiment, the analysis device is configured to receive anomaly resolve data from a user; wherein the anomaly resolve data comprises information how the user has resolved the detected anomaly. The analysis device comprises a knowledge management unit, wherein the knowledge management unit is configured to store the anomaly resolve data. The analysis device is configured to determine the suggested actions to resolve the root cause using the stored anomaly resolve data.

Preferably, the user is a technical expert.

In a preferred embodiment, the control device is configured to detect a resolve of the detected anomaly using the continuous sensor data and/or the wake up sensor data and if the resolve of the detected anomaly is detected, putting the woken up sleeping sensors into the sleeping state.

According to an aspect of the invention, a method for monitoring a production process comprises the following steps. Providing, by a plurality of always-on sensors, continuous sensor data. Receiving, by a control device, the continuous sensor data from the plurality of always-on sensors. Detecting, by the control device, an anomaly in the production process and determining an anomaly location of the anomaly based on the provided continuous sensor data; wherein the anomaly location defines an area in which the anomaly is located. Waking up, by the control device, at least one of a plurality of sleeping sensors that are located within the anomaly location. Receiving, by the control device, wake up sensor data from the at least one woken up sleeping sensors.

As a further example, water Networks are candidates for applying the concept. Audio sensors, i.e. microphones or vibration pickups or similar, are example sensors, which are in principle capable to pick up acoustic or vibrational effects generated by leaks.

Additional (if possible, low-cost-) sensors can measure further leakage effects such as corrosion, ambient or surface temperature off the pipe, absolute pressure in the pipe, electrical and/or thermal conductivity of water, pipe wall, or ambience.

It would not be beneficial, however, if these sensors were always in operation, since they would generate a large amount of non-useful data (an unused data lake). So, one can take continuous data from standard sensors, e. g. electromagnetic flow meters or others, such as differential pressure meter s or thermometers, and trigger the added sensors in case of unusual events or situations.

This can be done, for example, as a result of typical Minimum Night Flow - Analysis, which is commonly performed and used for rough localization of leaks, from the analysis of diurnal water use patterns.

To realize the concept, the additional sensor or collection (network) of such sensors can be part of a standalone measurement system which can be started from the network operation system on demand. Inside the operating system, the analysis of standard data and e.g. fingerprinting can be done in order to trigger the additional sensor(s).

The added sensors, then, will give in-depth information regarding the network status for, e.g., a pre-defined amount of time. This can be used to localize and / or assess and classify leaks remotely and possibly automatically (if advanced signal processing or AI is applied to the data).

It is also possible to have a direct communication connection between the added sensors and one or several of the standard instruments (e.g. flow meters or thermometers). In a beneficial setup, such a device may be equipped with an analog or digital input port for the signals from the additional sensors or the additional sensor network.

The sensors system, in another beneficial setup, will be battery-powered or using a power storage and some energy harvesting concept. The communication connections can be wired or wireless. Wireless opportunities can use typical industrial protocols or protocols taken from consumer goods' markets such as bluetooth.

The subject matter of the invention will be explained in more detail in the following text with reference to preferred exemplary embodiments which are illustrated in the attached drawings, in which:

### Brief description of the drawings

Exemplary embodiments of the invention will be described in the following with reference to the accompanying drawings:
Fig.1 shows a schematic view on a system for monitoring a production process according to a first embodiment;
Fig.2 shows a schematic view on a system for monitoring a production process according to a second embodiment;
Fig.3 shows a schematic view on a system for monitoring a production process according to a third embodiment;
Fig. 4 shows a schematic view on a method for monitoring a production process; and
Fig. 5 shows another schematic view on method for monitoring a production process.

The reference symbols used in the drawings, and their meanings, are listed in summary form in the list of reference symbols. In principle, identical assembly parts are provided with the same reference symbols in the figures.

Preferably, the functional modules and/or the configuration mechanisms are implemented as programmed software modules or procedures, respectively; however, one skilled in the art will understand that the functional modules and/or the configuration mechanisms can be implemented fully or assembly partially in hardware.

### Detailed description of exemplary embodiments

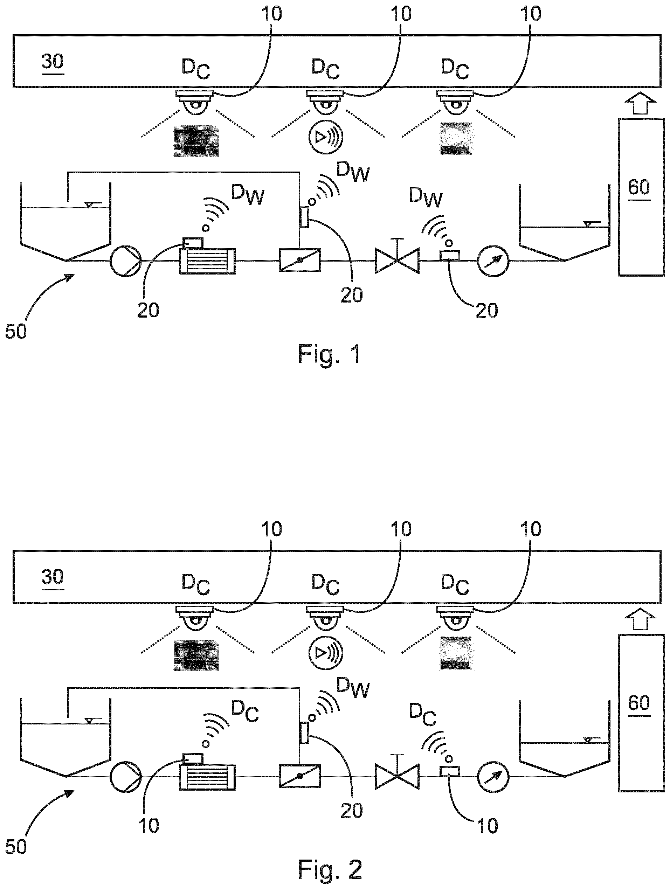

Fig. 1 shows a schematic view on a system for monitoring a production process 50 according to a first embodiment.

The system comprises a plurality of always-on sensors 10, a plurality of sleeping sensors 20, a control device 30.

A distributed control system 60, which is not part of the system for monitoring the production process 50, controls a production plant and with it the production process 50. The production process 50 indicates processing a fluid of one container and providing it to another container. The production process 50 is monitored by the system for monitoring the production process.

The control device 30 can preferably be connected with the always-on sensors 10 via wire and is connected with the sleeping sensors 20 via wireless communication.

The always-on sensors 10 provide the control device 30 continuously with continuous sensor data Dc. In other words, the always-on sensors 10 are active all the time and monitor the production process 50 in their respective range. However, the continuous sensor data Dc are only provided in a predetermined measurement interval, for example once every second. In this case, three always-on sensors 10 are provided, which are broad band sensors. The three always-on sensors 10 are a visual sensor, an acoustic sensor and an infrared sensor, which provide the continuous sensor data Dc with a resolution that allows to detect an anomaly A in the production process 50 and allow to determined a rough anomaly location 80. The anomaly A may for example be an explosion that can be detected by any one of the broad band sensors.

The sleeping sensors 20 are generally in a deactivated state, also referred to as sleeping state, where not sensor data is provided. The control device 30 is able to activate, or in other words wake up, one or more of the sleeping sensors 20. When a sleeping sensor 20 is activated, the woken up sleeping sensor 21 provides wake up sensor data Dw to the control device 30. The sleeping sensors 20 are further dynamically parametrized by the control device 30, in particular adjusting the measurement interval of the sleeping sensors 20.

The control device 30 uses the continuous sensor data Dc to detect an anomaly A and its rough location, referred to as anomaly location 80. The control device 30 then wakes up the sleeping sensors 20 that can provide sensor data in the anomaly location 80. Thus, the control device 30 is able to receive wake up sensor data Dw from the anomaly location 80 for further analysis of the anomaly A. Consequently, the sleeping sensors 20 can stay deactivated as long as no anomaly A is detected to save energy consumption.

Fig. 2 shows a schematic view on a system for monitoring a production process according to a second embodiment. Compared to the first embodiment, two of the sleeping sensors 20 are always-on sensors 10. This should indicate that the always-on sensors 10 do not only comprise broad band sensors. The production process 50 for example uses a plurality of production process sensors that are used to monitor specific steps of the production process. For this application different sensors are located at the hardware of the production process 50, for example temperature sensors or vibration sensors, to continuously monitor a hardware of the production process 50. As those sensors are providing their sensor data continuously anyways to the distributed control system 60 in order to control the production process 50, those sensors can also be used by the control device 30 to monitor the production process 50. Thus, the system according to a second embodiment comprises five always-on sensors 10 and only one sleeping sensor 20. The sleeping sensor 20 is consequently not used for controlling the production process 50 at the moment and is thus preferably a sensor that is temporarily disposed at a hardware of the production process 50. For example, the sleeping sensor 20 is a non-invasive temperature sensor that is clamped onto a pipe.

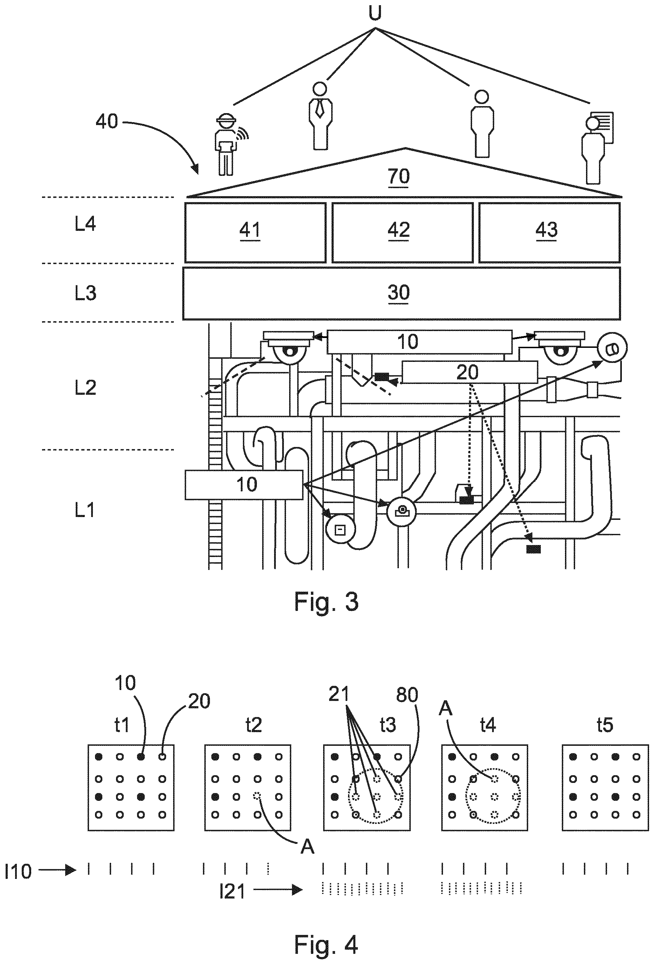

Fig. 3 shows a schematic view on a system for monitoring a production process according to a third embodiment. In line with the first and second embodiment, the system comprises a plurality of always-on sensors 10, a plurality of sleeping sensors 20, a control device 30. Fig. 3 indicates the multi-layer system that the system for monitoring the production process consists of, which comprise hardware and software components.

A first layer L1, referred to as local sensor layer, comprises existing sensors for controlling the production process 50 and add-on local sensors that are not used for controlling the production process 50 at the moment but have been added to the hardware of the production process 50. The existing sensors are used by the control system 30 as always-on sensors 10 and the add-on local sensors are used by the control system 30 as sleeping sensors 20.

A second layer L2, referred to as supervision sensor layer, comprises existing broadband sensors for controlling the production process 50 and hardwired broad band sensors for monitoring the production process 50. The existing broadband sensors and hardwire broad band sensors are used by the control system 30 as always-on sensors 10.

A third layer L3, referred to as control layer, comprises the control device that works as an autonomous sensor system watchdog that on an event base controls a parametrization of the sleeping sensors 20.

A fourth layer L4, referred to as analysis layer, comprises an analysis device 40 which comprise a root cause analysis unit 41, a monitoring unit 42 and a knowledge management unit 43. The analysis device 40 receives filtered sensor data from the control device 30, which comprises continuous sensor data Dc and/or the wake up sensor data D_{w} that are needed for root cause analysis. In particular, the filtered sensor data only comprises sensor data that relates to the anomaly location 80. The root cause analysis unit 41 is configured to determine a root cause for the anomaly A based on the filtered sensor data. The monitoring unit 42 provide failure detection and interpretation using the filtered sensor data. The failure detection and interpretation may be used by the analysis unit 41 for root cause analysis. The knowledge management unit 43 is configured to store anomaly resolve data, which has been formerly received by a user and contains information how the user has resolved former anomalies. Thus, the knowledge management unit 43 can provide the anomaly resolve data to the analysis device 40 to determine a suggested action to resolve the root cause of the present anomaly A.

Above the fourth layer L4 a user interface 70 is indicated, that can be used by a user to access the system for monitoring a production process. The user might be a maintenance manager, a production planner, an operator or a process engineer.

Fig. 4 shows a schematic view on a method for monitoring a production process.

In a first time step t1, the system for monitoring the production process is in normal operation mode. Four always-on sensors 10 provide continuous sensor data Dc, while the sleeping sensors 20, in this case twelve sleeping sensors 20, are deactivated.

In a second time step t2, the control system 30 detects an anomaly A in the continuous sensor data Dc of one of the always-on sensors 10.

In a third time step t3, the control system 30 wakes up the sleeping sensors 20 that are located in an anomaly location 80 around the always-on sensor 10 that was the source for the detection of the anomaly A. Those woken up sleeping sensors 21 provide wake up sensor data Dw to the control device 30.

In a fourth time step t4, based on the wake up sensor data Dw, the control device 30 verifies the anomaly A. In particular, one of the woken up sleeping sensors 21 provides a more accurate location and nature of the anomaly A.

In a fifth time step t5, the analysis device has found a root cause of the anomaly A and resolved the root cause. Thus, the control system 30 deactivates the woken up sleeping sensors 21 again and goes back to normal operation.

Furthermore, Fig. 4 indicates that an always-on sensor measurement interval I10 of the always-on sensors 10 is lower than a woken up sleeping sensor measurement interval 21 of the woken up sleeping sensors 21.

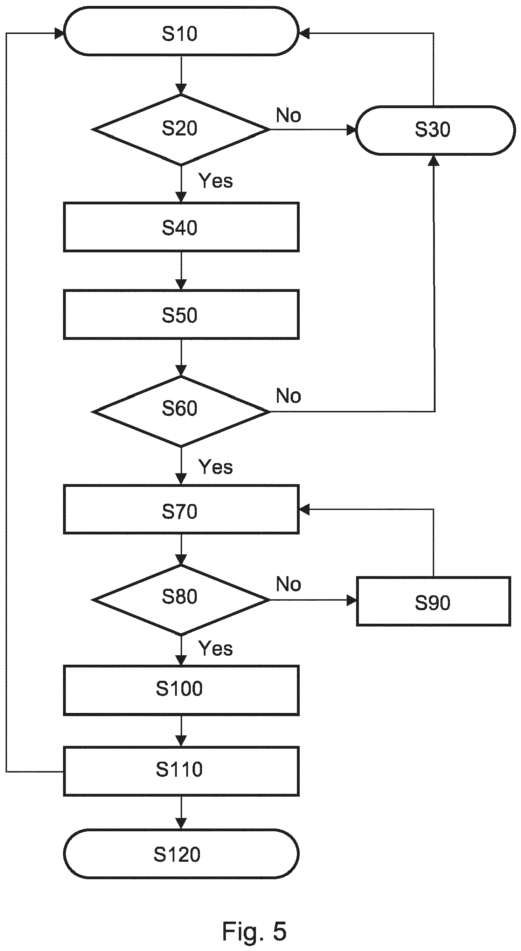

Fig. 5 shows another schematic view on method for monitoring a production process.

In a first method step S10, the system for monitoring a production process in normal operation state, wherein the continuous sensor data Dc are provided to the control device 30 for anomaly detection.

This anomaly detection is indicated by the second method step S20. The continuous sensors data Dc are provided to the control device 30 in a predetermined measurement interval, for example once per second. If no anomaly A is detected, the method jumps to a third method step S30, resuming to always-on sensor 10 monitoring.

If an anomaly A is detected, the method jumps to a fourth method step S40, wherein the control device 30 determines a rough location of the anomaly A, referred to as anomaly location 80. The control device 30 then wakes up all sleeping sensors 20 that are located within the anomaly location 80 or at least can provide measurements within the anomaly location 80. The method then jumps to a fifth method step S50.

In the fifth method step S50, the control device 30 tries to verify the presence of the anomaly A using the wake up sensor data Dw.

In a sixth method step S60, if the anomaly A is verified, for example by confirming an abnormal behaviour of the production process by the wake up sensor data Dw, the control device 30 provides filtered sensor data to the analysis device 40 for root cause analysis and jumps to a seventh method step S70. If the anomaly A is not verified the method jumps to the third method step S30, returning to normal operations with the sleeping sensors 20 being deactivated.

In the seventh method step S70, the analysis device 40 runs a root cause analysis using the filtered sensor data together with any available contextual information, for example provide by a monitoring unit 42 of the analysis device 40.

So in an eighth method step S80 it is determined if a root cause is found. If no root cause could be found, the method jumps to a ninth method step S90. I a root cause could be found, the method jumps to a tenth method step S100.

In the ninth method step S90, the control device 30 refines the parametrization of the sleeping sensors 20 in order to increase a performance of the monitoring. For Example the measurement interval is decreased or additional sensing functions of the sleeping sensors 20 are activated. The method then jumps to the seventh method step S70 to redo the root cause analysis.

In the tenth method step S100, the analysis device 40 presents its findings of a root cause, its reasoning for the finding and/or a suggested action to resolve the anomaly to a user via a user interface. The method then jumps to an eleventh method step S110.

In the eleventh method step S110, the user inputs to the analysis device 40 that the anomaly has been resolved, which is fed back to the control device 30, resulting in normal operation of the system for monitoring the production process and the method jumps to the first step S10.

Twelfth method step S120 indicates that the anomaly has been resolved.

### List of reference symbols

- 10: always-on sensor
- 20: sleeping sensor
- 21: woken up sleeping sensor
- 30: control device
- 40: analysis device
- 41: root cause analysis unit
- 42: monitoring unit
- 43: knowledge management unit
- 50: production process
- 60: distributed control system
- 70: user interface
- 80: anomaly location
- Dc: continuous sensor data
- Dw: wake up sensor data
- U: user
- A: anomaly
- L1: local sensor layer
- L2: supervision sensor layer
- L3: control layer
- L4: analysis layer
- t1-t5: time steps
- 110: always-on sensor measurement interval
- 121: woken up sleeping sensor measurement interval
- S10-S120: method steps

## Claims

1. System for monitoring a production process, comprising:
at least one always-on sensor (10), wherein the at least one always-on sensor (10) is configured to continuously provide continuous sensor data (Dc);
a plurality of sleeping sensors (20), wherein the plurality of sleeping sensor (20) is configured to be switchable between a sleeping state in which the plurality of sleeping sensors (20) is not active and an active state, in which the plurality of sleeping sensors (20) is configured to provide wake up sensor data (Dw);
a control device (30), being connected with the at last one always-on sensor (10) and the plurality of sleeping sensors (20), wherein the control device (30) is configured to:
receive the continuous sensor data (Dc) from the at least one always-on sensor (10);
detect an anomaly (A) in the production process and determine an anomaly location (80) of the anomaly (A) both based on the provided continuous sensor data (Dc); wherein the anomaly location (80) defines an area in which the anomaly (A) is located;
waking up at least one of the plurality of sleeping sensors (20) that are located within the anomaly location (80); and
receiving the wake up sensor data (Dw) from the at least one woken up sleeping sensors (21).

2. System of claim 1,
the at least one always-on sensor (10) comprises a broad band sensor.

3. System of claim 2,
wherein the broad band sensors comprise an electromagnetic radiation sensor and/or an acoustic sensor and/or a vibration sensor and/or a visual sensor.

4. System of any of the preceding claims,
comprising an analysis device (40), being connected with the control device (30);
wherein the control device (30) is configured to provide determine filtered sensor data from the received continuous sensor data (Dc) and/or the wake up sensor data (Dw);
wherein the analysis device (40) is configured to receive the filtered sensor data from the control device (30) and determine a root cause of the detected anomaly (A) using a root cause analysis.

5. System of any one of the preceding claims,
wherein the control device (30) is configured to provide the filtered sensor data to the analysis device (40) only when an anomaly (A) is detected by the control device.

6. System of any one of the preceding claims,
wherein the filtered sensor data comprises wake up sensor data (Dw) of the woken up sleeping sensors (21) that are located within the anomaly location (80).

7. System of any one of the preceding claims,
wherein the analysis device (40) comprises a root cause analysis unit (41) that is configured to perform the root cause analysis, wherein the root cause analysis unit (41) comprises a machine learning unit.

8. System of any one of the preceding claims,
wherein the root cause analysis unit (41) comprises a process model, wherein the process model is configured to simulate the production process, wherein the process model is used to perform the root cause analysis.

9. System of any one of the preceding claims,
wherein the analysis device (40) comprises a monitoring unit (42), wherein the monitoring unit (42) is configured to provide failure detection and interpretation using the filtered sensor data.

10. System of any one of the preceding claims,
wherein the control device (30) is configured to verify the detected anomaly (A) using the received wake up sensor data (Dw);
if the anomaly (A) is verified, providing the analysis unit (40) with the filtered sensor data;
if the anomaly (A) is not verified, putting the woken up at least one of the plurality of sleeping sensors (21) into the sleeping state.

11. System of any one of the preceding claims,
wherein determining the root cause of the detected anomaly (A) using a root cause analysis comprises:
if the route cause analysis fails, determining a root cause fail signal and providing the root cause fail signal to the control device (30);
wherein the control device (30) is configured to refine a parametrization of the woken up sleeping sensors (21), when the root cause fail signal is received.

12. System of any one of the preceding claims,
wherein the analysis device (40) is configured to determine suggested actions to resolve the root cause using the determined root cause.

13. System of claim 12,
wherein the analysis device (40) is configured to receive anomaly resolve data from a user (U); wherein the anomaly resolve data comprises information how the user has resolved the detected anomaly;
wherein the analysis device (40) comprises a knowledge management unit (43), wherein the knowledge management unit (43) is configured to store the anomaly resolve data;
wherein the analysis device (40) is configured to determine the suggested actions to resolve the root cause using the stored anomaly resolve data.

14. System of any one of the preceding claims,
wherein the control device (30) is configured to detect a resolve of the detected anomaly (A) using the continuous sensor data (Dc) and/or the wake up sensor data (Dw);
if the resolve of the detected anomaly (A) is detected, putting the woken up sleeping sensors (21) into the sleeping state.

15. Method for monitoring a production process, comprising the steps:
providing, by at least one always-on sensor (10), continuous sensor data (Dc);
receiving, by a control device (30), the continuous sensor data (Dc) from the at least one always-on sensor (Dc);
detecting, by the control device (30), an anomaly (A) in the production process and determining an anomaly location (80) of the anomaly (A) based on the provided continuous sensor data (Dc); wherein the anomaly location (80) defines an area in which the anomaly (A) is located;
waking up, by the control device (30), at least one of a plurality of sleeping sensors (20) that are located within the anomaly location (80);
receiving, by the control device (30), wake up sensor data (Dw) from the at least one woken up sleeping sensors (21).
